# EUROPÄISCHE PATENTANMELDUNG

(11) **EP 1 285 787 A2**
(43) Veröffentlichungstag der Anmeldung: **26.02.2003**
(21) Anmeldenummer: 02017201.1
(22) Anmeldetag: 31.07.2002
(51) Int. Cl.: B60G 13/00, B60G 15/07, B60G 7/00, B60B 27/00

(54) **Radaufhängung eines Kraftfahrzeuges**

(30) Priorität: 23.08.2001 DE 10141441
(71) Anmelder: DaimlerChrysler AG, 70567 Stuttgart (DE)
(72) Erfinder: Förnbacher, Joachim, 71711 Steinheim-Kleinbottwar (DE); Hespelt, Achim, 71579 Spiegelberg (DE)

(57) **Zusammenfassung**

Die Erfindung betrifft eine Radaufhängung eines Kraftfahrzeuges mit einem mit dem Fahrzeugaufbau über radführende und radlenkende Bauteile verbundenen Radträger, der über eine Radnabe mindestens ein Rad wälzgelagert trägt. Dazu umfasst der Radträger ein fahrzeugaufbauseitiges und ein radseitiges Radträgerteil. Das fahrzeugaufbauseitige und das radseitige Radträgerteil sind relativ zueinander beweglich über ein Schub- oder ein Schwenkgelenk verbunden, wobei die Radträgerteile zueinander eine Vorzugsstellung haben. Die Richtung der Relativbewegung zwischen dem fahrzeugaufbauseitigen und dem radseitigen Radträgerteil verläuft annähernd in Fahrtrichtung oder in Fahrtgegenrichtung. Außerdem sind zwischen den Radträgerteilen die Gelenkbewegung rückstellende Elemente angeordnet, die die Radträgerteile in Richtung der Vorzugsstellung zurückstellen.

Mit der vorliegenden Erfindung wird eine Radaufhängung entwickelt, die den Fahrkomfort eines Fahrzeuges beim Beschleunigungs- und Verzögerungsvorgängen erhöht sowie den Reifenverschleiß vermindert.

## Beschreibung

Die Erfindung betrifft eine Radaufhängung eines Kraftfahrzeuges mit einem mit dem Fahrzeugaufbau über radführende und radlenkende Bauteile verbundenen Radträger, der über eine Radnabe mindestens ein Rad wälzgelagert trägt.

Bei Beschleunigungs- und Bremsvorgängen eines Kraftfahrzeuges wirken Längskräfte auf die einzelnen Räder. Außerdem treten beim Fahren auf einer beispielsweise unebenen Fahrbahn Stöße auf die Räder auf. Diese werden im allgemeinen in Elastomerelementen aufgenommen, die meist an der fahrzeugaufbauseitigen Befestigung der Radaufhängung angeordnet sind. Die Dämpfung dieser Elastomerelemente bestimmt den Längsfederkomfort des Fahrzeuges. Hierbei wird häufig die gesamte Fahrzeugachse in Fahrzeuglängsrichtung versetzt. Gleichzeitig wird beim Beschleunigen und beim Bremsen das Niveau des Fahrzeugaufbaus verändert, wobei die Vorspur des Fahrzeuges beeinflusst wird. Hierbei kann sich der Winkel der Räder zur Fahrtrichtung verändern und der Reifenverschleiß zunehmen.

Aus der DE 198 32 384 C1 ist eine Einzelradaufhängung bekannt, bei der zwischen dem Radträger und einem Schräglenker ein Schwenkschubgelenk mit einem Pendellenker mit zwei annähernd vertikal ausgerichteten Schwenkachsen angeordnet ist. Beim Bremsen wird das einzelne Rad um die Schwenkachsen geschwenkt und gezielt eine Änderung der Vorspur bewirkt.

Der vorliegenden Erfindung liegt die Problemstellung zugrunde, eine Radaufhängung zu entwickeln, die den Fahrkomfort eines Fahrzeuges bei Stößen auf die Räder, bei Beschleunigungs- und Verzögerungsvorgängen erhöht sowie den Reifenverschleiß vermindert.

Diese Problemstellung wird mit den Merkmalen des Hauptanspruches gelöst. Dazu umfasst der Radträger ein fahrzeugaufbauseitiges und ein radseitiges Radträgerteil. Das fahrzeugaufbauseitige und das radseitige Radträgerteil sind relativ zueinander beweglich über ein Schub- oder ein Schwenkgelenk verbunden, wobei die Radträgerteile zueinander eine Vorzugsstellung haben. Die Richtung der Relativbewegung zwischen dem fahrzeugaufbauseitigen und dem radseitigen Radträgerteil verläuft annähernd in Fahrtrichtung oder in Fahrtgegenrichtung. Außerdem sind zwischen den Radträgerteilen die Gelenkbewegung rückstellende Elemente angeordnet, die die Radträgerteile in Richtung der Vorzugsstellung zurückstellen.

Zwischen dem fahrzeugaufbauseitigem und dem radseitigen Radträger sind Schub- oder Schwenkgelenke angeordnet. Von außen wirkende Stoßkräfte und Längskräfte, z.B. durch Längsbeschleunigungen oder -verzögerungen des Fahrzeuges verursachen eine Relativbewegung der Teile des Radträgers zueinander. Hierbei bewegen sich diese Teile aus einer Vorzugsstellung heraus und werden bei Abnahme der positiven oder negativen Beschleunigung durch rückstellende Elemente, z.B. Feder-Dämpfer-Elemente, wieder in eine Vorzugsstellung zueinander zurückgestellt. Die Relativbewegung erfolgt annährend in Fahrtrichtung. Hierdurch bleibt die Vorspur des einzelnen Rades beim Auslenken des Schub- oder Schwenkgelenks erhalten. Der Verschleiß der Reifen wird nicht erhöht.

Längskräfte durch Beschleunigungen und Stoßkräfte werden in den Schub- oder Schwenkgelenken, zwischen den fahrzeugaufbauseitigen und den radseitigen Teilen des Radträgers, aufgenommen. Hiermit wird der Längsfederkomfort und der Fahrkomfort erhöht. Bei der Aufnahme der Kräfte wird nur das Rad mit einem Teil seiner Radaufhängung bewegt, die Achse behält ihre Lage am Fahrzeugaufbau bei. Zwischen der Radaufhängung und dem Fahrzeugaufbau sind zur Aufnahmen dieser Längskräfte keine Elastomerelemente erforderlich.

Diese Radaufhängung kann sowohl bei angetriebenen als auch bei nicht angetriebenen Rädern an Vorder- und hinterachsen sowie mit verschiedenen Achsbauweisen, wie z.B. eine Verbundlenkerachse, eine Schräglenkerachse, etc., eingesetzt werden.

Die Richtung der Relativbewegung kann je nach Belastung des einzelnen Rades sowohl in Fahrtrichtung als auch in Fahrtgegenrichtung erfolgen.

Beschleunigungskräfte greifen in der Radaufstandsfläche des Kraftfahrzeuges an. Sie wirken auf die Schub- und/oder Schwenkgelenke als Momente mit dem Hebelarm des Abstandes der Radaufstandsfläche von dem der Radaufstandsfläche nächsten Führungselement.

Stoßkräfte, die beispielsweise beim Überfahren eines tiefen Schlagloches auf das Rad wirken, wirken als Impuls auf das Rad. Sie greifen zumindest annähernd parallel zur Fahrbahn an der Radmittenquerebene an.

Ein Schubgelenk kann beispielsweise zwei zueinander parallele Linearführungen umfassen. Das Spiel des Schubgelenks ist dann durch die doppelte Führung geringer als bei einer einfachen Führung.

Ein Schwenkgelenk kann ein Kugelgelenk umfassen. Wird das Rad mit einer Stoß- oder Beschleunigungskraft belastet, bleibt dieses Gelenk in bezug auf beide Teile des Radträgers ortsfest.

Liegt eine der Führungen oder ein Gelenk unterhalb der Raddrehachse, wird bei Beschleunigungsvorgängen vor allem dieses belastet. Hat dieses z.B. eine höhere Steifigkeit als eine höher angeordnete zweite Führung, führt die Belastung durch Beschleunigungskräften zu einer Schwenkbewegung um die untere Führung bzw. das untere Gelenk. Die Lage der Radaufstandsfläche bleibt relativ zum Gelenk annährend erhalten. Die Nachgiebigkeit des Schub- oder Schwenkgelenks bei dieser Belastung ist gering.

Beim Einwirken von Stoßkräften wird in diesem Fall sowohl die obere Führung als auch die untere Führung belastet. Die steife untere Führung wird weniger stark komprimiert als die weichere obere Führung. Die Raddrehachse wandert relativ zur Radaufstandsfläche nach hinten. Die Nachgiebigkeit des Schub- oder Schwenkgelenkes bei dieser Belastung ist hoch.

Weitere Einzelheiten der Erfindung ergeben sich aus den Unteransprüchen und der nachfolgenden Beschreibung schematisch dargestellter Ausführungsformen.
- Figur 1:: Radaufhängung an einer nicht angetriebenen Achse mit einem Schubgelenk;
- Figur 2:: Teilschnitt von Figur 1;
- Figur 3:: Radaufhängung an einer nicht angetriebenen Achse mit einem Schwenkgelenk;
- Figur 4:: Teilschnitt von Figur 3.

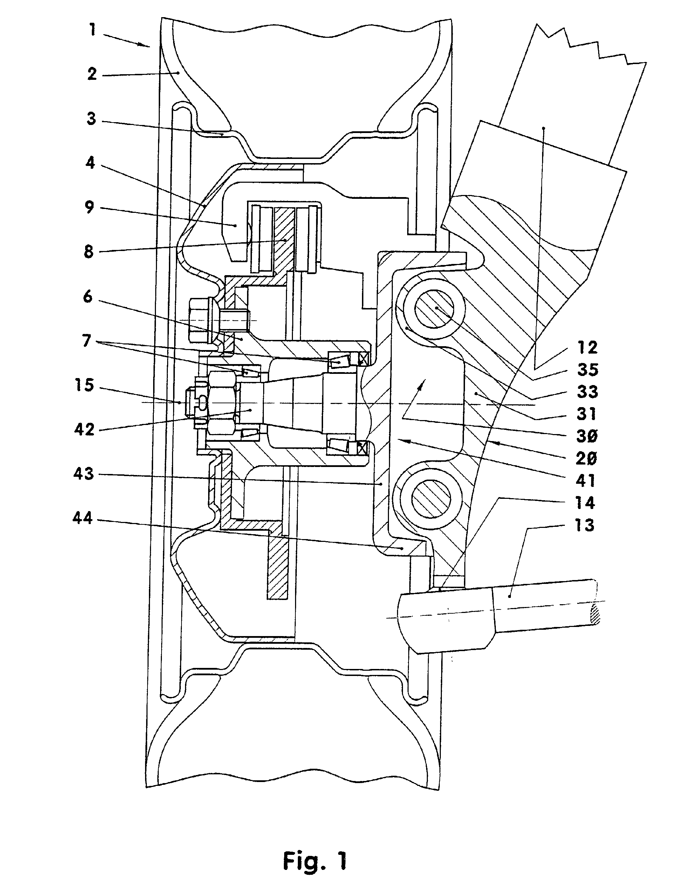

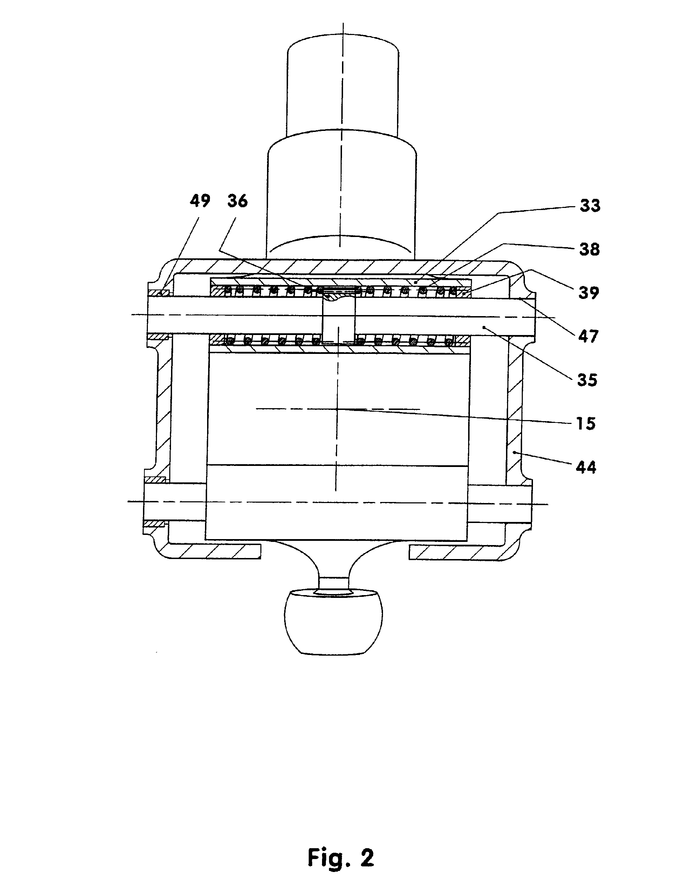

Die Figuren 1 und 2 zeigen eine Radaufhängung einer nicht angetriebenen Achse eines Kraftfahrzeuges mit einem Schubgelenk (30). Die Figur 1 stellt hierbei z.B. die Ansicht einer linken Radaufhängung in Fahrtrichtung dar, die Figur 2 zeigt einen Teilschnitt durch das Schubgelenk (30), in Richtung der vertikalen Fahrzeugmittenlängsebene gesehen.

Die Radaufhängung umfasst einen Radträger (20). Dieser wird über radführende und radlenkende Bauteile (12, 13) am hier nicht dargestellten Fahrzeugaufbau abgestützt. Das Bauteil (12) ist beispielsweise ein Federbein und das Bauteil (13) ein unterer Querlenker. Letzterer ist über ein Kugelgelenk (14) mit dem Radträger (20) verbunden. Ein Rad (1) stützt sich an dem Radträger (20) über eine Radnabe (6) und eine Wälzlagerung (7) ab. Hierfür ist an der Radnabe (6) eine Felge (3) mit einem Reifen (2) befestigt. Außerdem sitzt auf der Radnabe (6) eine Bremsscheibe (8), die von einer Bremssattelfaust (9) mit Bremsbelägen umgriffen wird.

Der in den Figuren 1 und 2 dargestellte Radträger (20) umfasst ein fahrzeugaufbauseitiges (31) und einen radseitiges Radträgerteil (41). Diese beiden Teile (31, 41) sind über ein z.B. mehrteiliges Schubgelenk (30) miteinander verbunden.

Das fahrzeugaufbauseitige Radträgerteil (31) ist beispielsweise ein Schmiedeteil, das fest mit dem Federbein (12) verbunden ist. An seiner zur Fahrzeugaußenseite orientierten Seite hat das fahrzeugaufbauseitige Radträgerteil (31) beispielsweise zwei zueinander parallele Führungshülsen (33). Diese sind annährend parallel zur hier nicht dargestellten Fahrbahn und z.B. beim geradeaus laufenden Rad (1) parallel zur vertikalen Radmittenlängsebene übereinander angeordnet. Die obere der Führungshülsen (33) liegt hierbei z.B. oberhalb der Raddrehachse (15), die untere der Führungshülsen (33) ist beispielsweise im gleichen Abstand zur Raddrehachse (15) unterhalb dieser angeordnet.

In den Führungshülsen (33) ist je eine Führungsstange (35) eingesetzt. Diese ist beispielsweise eine zylindrische Stange, die mittig einen Kolben (36) aufweist. Auf beiden Seiten dieses Kolbens (36) ist je eine Druckfeder (38) angeordnet, z.B. eine Schraubenfeder. Die freien Ende der Druckfedern (38) stützen sich an je einem Gleitstück (39) ab. Diese Gleitstücke (39) sind in den Führungshülsen (33) befestigt und haben ein minimales radiales Spiel zu den Führungsstangen (35).

Das radseitige Radträgerteil (41) umfasst einen Radträgerzapfen (42) sowie einen an diesen beispielsweise angeschmiedeten Radträgerflansch (43). Der Radträgerzapfen (42) hat verschiedene abgesetzte Durchmesserbereiche. Auf ihm sitzen die Innenringe der Wälzlagerungen (7) und eine die Wälzlagerungen (7) verspannende Mutter.

Der Radträgerflansch (43) umfasst einen vertikal angeordneten, annähernd rechteckigen Rahmen (44). Dieser Rahmen (44) kann auch als Gabel ausgebildet sein. Im Rahmen (44) befinden sich an den beiden einander gegenüberliegenden vertikalen Seiten je zwei Bohrungen (47), in denen beispielsweise zumindest auf einer Seite je eine Montagehülse (49) eingesetzt ist. Je zwei dieser Bohrungen (47) haben eine gemeinsame Achse. Die Bohrungen (47) sind beispielsweise in einer Ebene parallel zur vertikalen Radmittenlängsebene übereinander angeordnet. Der vertikale Abstand der Achsen der Bohrungen (47) entspricht dem vertikalen Abstand der Achsen der Führungshülsen (33).

Bei der Montage werden nach dem Einsetzen des fahrzeugaufbauseitigen Radträgerteils (31) in den Radträgerflansch (43) die Führungsstangen (35) zusammen mit den Montagehülsen (49) im Radträgerflansch (43) befestigt.

Das Schubgelenk (30) erlaubt eine Relativbewegung zwischen dem fahrzeugaufbauseitigem (31) und dem radseitigen Teilen (41) des Radträgers (20). In der Ruhelage sind beispielsweise die in Fahrtrichtung vorn und hinten liegenden Druckfedern (38) gleich belastet. Das fahrzeugaufbauseitige Radträgerteil (31) wird nahezu mittig im Rahmen (44) gehalten. Diese Position bildet eine Vorzugslage des Schubgelenkes (30).

Beim Beschleunigen des Fahrzeuges wird die nicht angetriebene Achse durch den Fahrzeugaufbau mitgezogen. Durch die Massenträgheit der Rad- und Bremsteile wandern diese Teile über den Radträgerflansch (43) im Schubgelenk (30) entgegen der Fahrtrichtung nach hinten. Die in Fahrtrichtung hinten liegenden Druckfedern (38) werden zusammengedrückt, die in Fahrtrichtung vorne liegenden Druckfedern (38) werden entlastet. Da die Führungen des Schubgelenks (30) linear sind, behält das einzelne Rad (1) bei dieser Relativbewegung seine Vorspur und seinen Vorspurwinkel bei. Nach Beendigung des Beschleunigungsvorganges stellen die Druckfedern (38) die Räder (1) wieder relativ zum Fahrzeugaufbau zurück, so dass das Schubgelenk zumindest annähernd seine Vorzugslage erreicht.

Eine angetriebene Achse zieht oder schiebt beim Beschleunigen des Fahrzeuges den Fahrzeugaufbau mit. Durch die Massenträgheit des Fahrzeugaufbaus wandert das einzelne angetriebene Rad (1) relativ zum Fahrzeugaufbau in Fahrtrichtung nach vorne.

Beim Bremsen des Fahrzeuges verzögert eine an der Bremsscheibe (8) angreifende Bremskraft die Räder (1), während der Fahrzeugaufbau durch seine Massenträgheit weiter in Fahrtrichtung zieht. Bei allen Rädern (1) verschiebt sich das fahrzeugaufbauseitige Radträgerteil (1) gegenüber dem radseitigen Radträgerflansch (43) in Fahrtrichtung nach vorne. Hierbei werden die jeweils in Fahrtrichtung vorne liegenden Druckfedern (38) belastet, während die in Fahrtrichtung hinten liegenden Druckfedern (38) entlastet werden. Das jeweilige Rad (1) wandert entlang des Schubgelenks (30) relativ zum Fahrzeugaufbau nach hinten. Ist beispielsweise die unterhalb der Raddrehachse (15) angeordnete Druckfeder (38) steifer als die oberhalb angeordnet, wird ggf. die unterhalb der Raddrehachse (15) liegende Druckfeder (38) stärker belastet als die oberhalb der Raddrehachse (15) angeordnete Druckfeder (38). Das Rad (1) schwenkt dann um seine Radaufstandsfläche. Die Nachgiebigkeit des Schubgelenks (30) ist gering. Die Spur des Rades (1) bleibt hierbei erhalten. Um den Hub der Relativbewegung im Schubgelenk (30) zu begrenzen, können z.B. die beim Bremsen in Druckrichtung liegenden Druckfedern (38) steifer ausgebildet sein als die hier geringer belasteten.

Die Führungen des Schubgelenks (30) sind so gestaltet, dass beim Beschleunigen und Bremsen ein Verkanten der Führungen verhindert wird. Hierfür ist die Führungslänge, hier der Abstand der Gleitstücke (49) zueinander, groß gegenüber ihrer Breite.

Beim Überfahren beispielsweise eines Schlagloches wirkt eine Stoßkraft auf das Rad (1). Diese Stoßkraft wirkt als zentraler Impuls entgegen der Fahrtrichtung auf das Rad (1). Hierbei werden die Führungen () des Schwenkgelenks gleichmäßig belastet. Ist nun beispielsweise die obenliegende Druckfeder (38) weicher als die untenliegende, schwenkt das Rad (1) beispielsweise um seine Radaufstandsfläche nach hinten. Die Spur des Rades (1) bleibt hierbei erhalten. Bei dieser Belastung ist die Nachgiebigkeit des Schubgelenks (30) hoch.

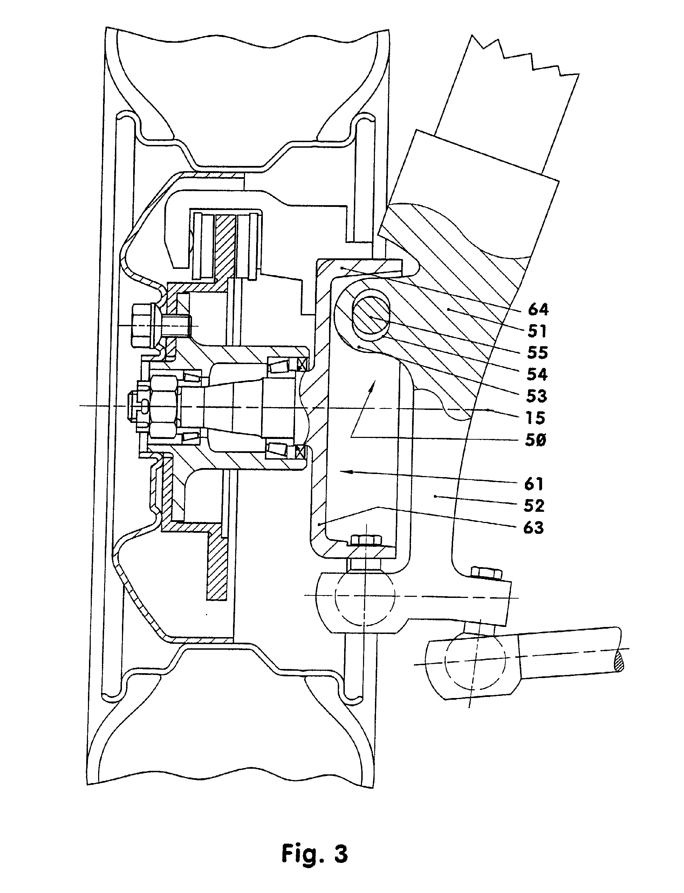

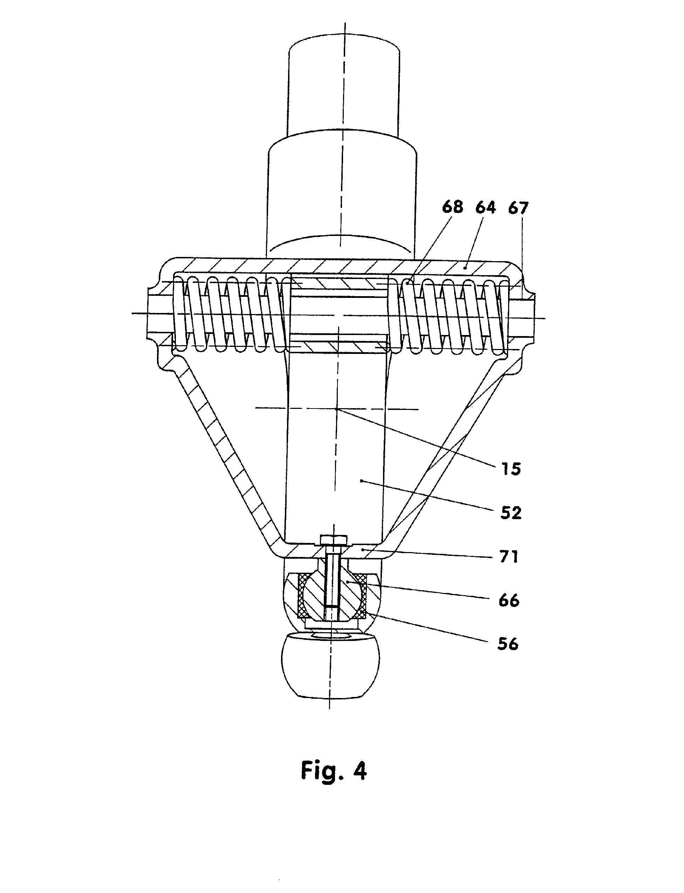

Die Figuren 3 und 4 zeigen eine Radaufhängung mit einem Schwenkgelenk (50). Die Figur 3 stellt hierbei z.B. die Ansicht einer linken Radaufhängung in Fahrtrichtung dar. Die Figur 4 zeigt einen Schnitt durch diese Radaufhängung in Höhe des Schwenkgelenkes (50) mit Blickrichtung in Richtung auf die vertikale Fahrzeugmittenlängsebene.

Bei dieser Radaufhängung entsprechen die wesentlichen, den Radträger (20) umgebenden Bauteile den in den Figuren 1 und 2 beschriebenen Komponenten.

Der in den Figuren 3 und 4 dargestellte Radträger umfasst ein fahrzeugaufbauseitiges (51) und ein radseitiges Radträgerteil (61). Diese beiden Teile (51, 61) sind über ein Schwenkgelenk (50) miteinander verbunden.

Das fahrzeugaufbauseitige Radträgerteil (51) trägt auf seiner zur Fahrzeugaußenseite orientierten Seite ein Führungselement (53) mit einer Langlochbohrung (54). Letzteres liegt parallel zur nicht dargestellten Fahrbahn und beispielsweise parallel zur vertikalen Radmittenlängsebene oberhalb der Raddrehachse (15). Unterhalb der Raddrehachse (15) hat das fahrzeugaufbauseitige Radträgerteil (51) einen Kragarm (52). In diesen Kragarm (52), der hier in die Felgenschüssel (4) hineinragt, ist eine Kugelkalotte (56) eingesetzt, vgl. Figur 4.

Die Kugelkalotte (56) liegt hierbei z.B. in derselben vertikalen Fahrzeuglängsebene, in der auch das Führungselement (53) liegt.

Das radseitige Radträgerteil (61) umfasst auch in diesem Ausführungsbeispiel einen zur Fahrzeugmitte gerichteten Radträgerflansch (63). Dieser hat einen annähernd trapezförmigen, vertikal angeordneten Rahmen (64), dessen kurze Seite (71) nach unten zeigt. Die Seitenteile des Rahmens (64) sind im oberen Drittel zueinander parallel und laufen nach unten hin im spitzen Winkel auf die kurze Seite (71) zu. In den beiden zueinander parallelen Seitenteilen ist je eine Bohrung (67) angeordnet, die eine gemeinsame Achse haben und zueinander kongruent sind. An der unteren kurzen Seite (71) des Rahmens (64) ist ein Kugelkopf (66) angeschraubt, wobei der Kugelkopf (66) nach unten zeigt. Die Bohrungen (67) liegen oberhalb der Raddrehachse (15) und der Kugelkopf (66) unterhalb der Raddrehachse (15) in einer gemeinsamen Ebene parallel zur vertikalen Radmittenlängsebene.

Bei der Montage wird beispielsweise zuerst das radseitige Radträgerteil (61) mit dem Kugelkopf (66) in die Kugelkalotte (56) des fahrzeugaufbauseitigen Radträgerteils (51) eingesetzt. Auf beiden Seiten des Führungselements (53) werden Druckfedern (68), z.B. Schraubenfedern, eingesetzt. Durch die Bohrungen (67) des Rahmens (64), die Druckfedern (68) und das Führungselement (53) wird nun eine Führungsstange (65) geschoben und zumindest in axialer Richtung im Rahmen (64) gesichert. Hierbei hat das Langloch (54) in der Richtung quer zur vertikalen Radmittenlängsebene ein minimales Spiel zur Führungsstange (65).

Das Schwenkgelenk (50) erlaubt eine Relativbewegung zwischen dem fahrzeugaufbauseitigem (51) und dem radseitigen Teil (61) des Radträgers (20). In der Ruhelage sind beispielsweise die in Fahrtrichtung vorn und hinten liegenden Druckfedern (68) gleich belastet. Diese z.B. mittige Position bildet eine Vorzugslage des Schwenkgelenkes (50).

Bei einem Beschleunigungsvorgang wird an einer nicht angetriebenen Achse die in Fahrtrichtung nach vorne liegende Druckfeder (68) belastet und die entgegen der Fahrtrichtung liegende Druckfeder (68) entlastet. Das radseitige Radträgerteil (61) schwenkt um einen kleinen Betrag beispielsweise im Uhrzeigersinn relativ zum fahrzeugaufbauseitigen Radträgerteil (51) um das Kugelgelenk (56, 66). Die Schwenkbewegung erfolgt hierbei zumindest annährend entgegengesetzt zur Fahrtrichtung. Sie erfolgt in einer Ebene, die die Führungsstange (65) und das Kugelgelenk (56, 66) enthält. Somit bleibt der vom Rad (1) und der vertikalen Fahrzeugmittenlängsebene eingeschlossene Winkel konstant. Der Spurwinkel des Rades (1) verändert sich nicht. Nach der Beschleunigung des Fahrzeuges stellt die Druckfeder (68) das Schwenkgelenk (50) in Richtung der Vorzugsstellung zurück.

Bei einer angetriebenen Achse wird beim Beschleunigen die in Fahrtrichtung hinten liegende Druckfeder (68) belastet.

Beim Bremsen wird sowohl an einer angetriebenen als auch an der nicht angetriebenen Achse die jeweils in Fahrtrichtung vorne angeordnete Druckfeder (68) belastet. Die Bremskraft hat hierbei dem Hebelarm des Abstandes der Radaufstandsfläche zum Kugelgelenk (56) an. Dieses Moment führt nur zu einem geringen Verschwenken des Schwenkgelenks (50). Um den Versatz der Achse zum Fahrzeugaufbau zu begrenzen, kann die in Fahrtrichtung vorne liegende Druckfeder (68) vor allem bei der angetriebenen Achse mit einer hohen Steifigkeit ausgeführt sein.

Beim Auftreten einer Stoßkraft greift der Impuls entgegen der Fahrtrichtung in Radmitte an. Die jeweilige in Fahrtrichtung vorne liegende Druckfeder (68) nimmt den Impuls auf. Das Rad wird hierbei um seine Radaufstandsfläche geschwenkt. Die Nachgiebigkeit des Schwenkgelenks (50) bei dieser Belastung ist gering.

Sowohl beim Schub- (30) als auch beim Schwenkgelenk (50) stützen sich die auf das Rad wirkenden Lenkkräfte über die Führungslänge ab. Diese ist beim dargestellten Schubgelenk (30) der Abstand der Gleitstücke (39), beim beschriebenen Schwenkgelenk (50) wird sie durch die Länge des Führungselementes (53) bestimmt.

Das Schub- (30) oder Schwenkgelenk (50) kann unterschiedlich aufgebaut sein. So kann statt des beschriebenen Schubgelenkes (30) mit zwei Linearführungen auch ein Schubgelenk (30) mit einem anderen Führungssystem eingesetzt werden, das ein Verdrehen der Führungs- und der Gegenführungsteile um die Längsachse verhindert. Auch kann das Schubgelenk (30) z.B. schräg oder quer zur Fahrbahn angeordnet sein.
Das Schwenkgelenk (50) kann z.B. mit einem zentralen Bolzen und einer Spiralfeder ausgeführt sein. Auch kann die Schwenkachse mit der Raddrehachse (15) zusammenfallen.

Als rückstellende Elemente können statt Druckfedern (38, 68) auch z.B. Tellerfedern, Spiralfedern etc. eingesetzt werden. Diese können z.B. unterschiedliche Steifigkeiten aufweisen. Auch können Feder-Dämpfer-Elemente, z.B. in Form von Elastomerelementen, hydraulische wirkenden Elemente, etc. eingesetzt werden. Auch Kombinationen, z.B. mechanischer Federelemente mit hydraulischen Dämpferelementen, sind denkbar. So kann z.B. beim Ausführungsbeispiel nach Figur 2 der durch die Gleitstücke (39) verschlossene und abgedichtete Raum mit einem Hydraulikmedium gefüllt sein, das bei einer Bewegung des fahrzeugaufbauseitigen (31) zum radseitigen Radträger (41) durch eine Längsbohrung des Kolbens (36) der Führungsstange (35) gepresst wird. Ggf. kann die Steifigkeit dieser rückstellenden Elemente einstellbar sein, z.B. in Abhängigkeit der Fahrbedingungen.

An der nicht angetriebenen Achse wird sowohl beim Beschleunigen als auch beim Verzögern nur die in Fahrtrichtung vorne liegende Druckfeder (38, 68) belastet. Es genügt daher der Einsatz einer Druckfeder (38, 68) nur auf der in Fahrtrichtung vorn liegenden Seite. Ggf. kann auf der in Fahrtrichtung hinten liegenden Seite eine Zugfeder, z.B. in Form einer Schraubenfeder, eingesetzt werden, die die Federsteifigkeit des rückstellenden Elementes (38, 68) erhöht.

Bei der Relativbewegung der Radträgerteile (31, 41, 51, 61) beim positiven und negativen Beschleunigen bleibt normal zur Fahrbahn gesehen der Winkel des entsprechenden Rades (1) zur vertikalen Fahrzeugmittenlängsebene und damit die Vorspur bzw. der Vorspurwinkel konstant. Ist die Bewegungsrichtung des Schub- (30) bzw. Schwenkgelenks (50) parallel zur vertikalen Radmittenlängsebene ausgerichtet, ändert sich bei der Relativbewegung die Spurweite der einander gegenüber liegenden Räder (1). Ist der Winkel zwischen der Bewegungsrichtung des Schub- (30) bzw. Schwenkgelenkes (50) mit der vertikalen Fahrzeugmittenlängsebene größer als der von der vertikalen Radmittenebene und der vertikalen Fahrzeugmittenlängsebene eingeschlossene Winkel, ist die Änderung der Spurweite bei der Relativbewegung des Schub- (30) bzw. Schwenkgelenkes (50) größer als bei der vorgenannten Anordnung. Dies wird z.B. bei eine Anordnung der Bewegungsrichtung des Schub- (30) bzw. Schwenkgelenks (50) parallel zur vertikalen Fahrzeugmittenlängsebene vermieden. Bei einer derartigen Anordnung bleibt bei der Relativbewegung der Radträgerteile (31, 41, 51, 61) zueinander sowohl die Vorspur als auch die Spurweite der Räder (1) erhalten.

Alle Führungselemente und Teile können z.B. auch an einem Block ausgeführt sein, der zwischen dem fahrzeugaufbauseitigen (31, 51) und dem radseitigen Radträgerteil (41, 61) angeordnet ist.

### Bezugszeichenliste:

- 1: Rad
- 2: Reifen
- 3: Felge
- 4: Felgenschüssel

- 6: Radnabe
- 7: Radlagerung, Wälzlagerung
- 8: Bremsscheibe
- 9: Bremssattelfaust

- 12: Federbein, radlenkendes Bauteil
- 13: Querlenker, radlenkendes Bauteil
- 14: Kugelgelenk
- 15: Raddrehachse

- 20: Radträger

- 30: Schubgelenk
- 31: fahrzeugaufbauseitiges Radträgerteil

- 33: Führungshülsen

- 35: Führungsstange, Linearführungsteil
- 36: Kolben

- 38: rückstellende Elemente, Druckfedern
- 39: Gleitstücke, Linearführungsteil

- 41: radseitiges Radträgerteil
- 42: Radträgerzapfen
- 43: Radträgerflansch
- 44: Rahmen

- 47: Bohrungen

- 49: Montagehülse
- 50: Schwenkgelenk
- 51: fahrzeugaufbauseitiges Radträgerteil
- 52: Kragarm
- 53: Führungselement
- 54: Langlochbohrung

- 56: Kugelkalotte

- 61: radseitiges Radträgerteil

- 63: Radträgerflansch
- 64: Rahmen
- 65: Führungsstange
- 66: Kugelkopf
- 67: Bohrung
- 68: rückstellende Elemente, Druckfedern

- 71: Seite, kurz zu (64)

## Patentansprüche

1. Radaufhängung eines Kraftfahrzeuges mit einem mit dem Fahrzeugaufbau über radführende und radlenkende Bauteile verbundenen Radträger, der über eine Radnabe mindestens ein Rad wälzgelagert trägt, **dadurch gekennzeichnet,**
- **dass** der Radträger (20) ein fahrzeugaufbauseitiges (31, 51) und ein radseitiges Radträgerteil (41, 61) umfasst,
- **dass** das fahrzeugaufbauseitige (31, 51) und das radseitige Radträgerteil (41, 61) relativ zueinander beweglich über ein Schub- (30) oder ein Schwenkgelenk (50) verbunden sind, wobei die Radträgerteile (31, 41, 51, 61) zueinander eine Vorzugsstellung haben,
- **dass** die Richtung der Relativbewegung zwischen dem fahrzeugaufbauseitigen (31, 51) und dem radseitigen Radträgerteil (41, 61) annähernd in Fahrtrichtung oder in Fahrtgegenrichtung verläuft, und
- **dass** zwischen den Radträgerteilen (31, 41, 51, 61) die Gelenkbewegung rückstellende Elemente (38, 68) angeordnet sind, die die Radträgerteile (31, 41, 51, 61) in Richtung der Vorzugsstellung zurückstellen.

2. Radaufhängung nach Anspruch 1, **dadurch gekennzeichnet, dass** ein Schubgelenk (30) zwei zueinander parallele Linearführungen (35, 39) umfasst.

3. Radaufhängung nach Anspruch 1, **dadurch gekennzeichnet, dass** ein Schwenkgelenk (50) ein Kugelgelenk (56, 66) umfasst.

4. Radaufhängung nach Anspruch 2 oder 3, **dadurch gekennzeichnet, dass** mindestens eine Führung oder ein Gelenk unterhalb der Raddrehachse (15) angeordnet ist.

5. Radaufhängung nach Anspruch 1, **dadurch gekennzeichnet, dass** eine normal zur Fahrbahn ausgerichtete Ebene durch die Richtung der Relativbewegung des Schub- (30) oder Schwenkgelenks (50) mit der vertikalen Fahrzeugmittenlängsebene einen Winkel einschließt, der kleiner oder gleich dem von der vertikalen Radmittenebene und der vertikalen Fahrzeugmittenlängsebene eingeschlossenen Winkel ist.

6. Radaufhängung nach Anspruch 1, **dadurch gekennzeichnet, dass** das Schub- (30) oder das Schwenkgelenk (50) parallel zur vertikalen Fahrzeugmittenlängsebene angeordnet ist.

7. Radaufhängung nach Anspruch 1 **dadurch gekennzeichnet, dass** zwischen den Radträgerteilen (31, 41, 51, 61) zumindest in eine Richtung rückstellende Elemente (38, 68) angeordnet sind.

8. Radaufhängung nach Anspruch 1, **dadurch gekennzeichnet, dass** die rückstellenden Elemente (38, 68) elastisch federnde und/oder dämpfende Elemente sind.
